# FASCICULE DE BREVET EUROPEEN

(11) **EP 0 978 431 B1**
(45) Date de publication et mention de la délivrance du brevet: **28.05.2003**
(21) Numéro de dépôt: 99401959.4
(22) Date de dépôt: 02.08.1999
(51) Int. Cl.: B60T 7/10

(54) **Dispositif de commande à main d'un actionneur électrique d'activation d'un frein secondaire d'un véhicule automobile**
Handbetätigte elektrische Auslösevorrichtung zur Betätigung einer Kraftfahrzeugzusatzbremse
Hand operated electric switch device for operation of a secondary brake of a vehicle

(30) Priorité: 04.08.1998 FR 9809973
(43) Date de publication de la demande: 09.02.2000
(73) Titulaire: AUTOMOBILES PEUGEOT, 75116 Paris (FR); AUTOMOBILES CITROEN, 92200 Neuilly-sur-Seine (FR)
(72) Inventeur: Goly, Fabrice, 95610 Eragny sur Oise (FR)
(74) Mandataire: Gendraud, Pierre

(56) Documents cités:
- EP-A- 0 207 275
- DE-A- 4 129 919
- DE-A- 4 218 717

## Description

La présente invention concerne un dispositif de commande à main d'un actionneur électrique d'activation d'un frein secondaire d'un véhicule automobile.

Elle se rapporte plus particulièrement à un dispositif de commande à main permettant de piloter un actionneur électrique de manière à activer ou désactiver les organes de freinage reliés aux roues du véhicule qui sont constitués, par exemple, d'au moins deux câbles associés respectivement à un étrier de freinage d'une roue arrière du véhicule, par enroulement ou déroulement des câbles.

On connaît déjà un dispositif de commande à main constitué d'un interrupteur permettant d'alimenter ou non l'actionneur, c'est-à-dire de provoquer un serrage ou un desserrage complet des organes de freinage du véhicule.

Un tel dispositif de commande présente l'inconvénient de fournir une information du type tout ou rien, empêchant ainsi tout réglage de l'effort de freinage par l'utilisateur lors notamment d'un démarrage en côte du véhicule.

Afin de remédier à cet inconvénient, on connaît également notamment par la demande de brevet français n°98 07524 déposée le 15 juin 1998 par les présentes demanderesses, un dispositif de commande d'un frein secondaire électrique constitué d'un levier de frein à main traditionnel associé à un actionneur électrique lui-même relié à des moyens d'enroulement/déroulement des câbles d'actionnement du frein secondaire du véhicule qui permet de mettre sous tension les câbles de serrage du frein secondaire en fonction d'une information de position dudit levier délivrée par un capteur qui lui est associé. Un calculateur permet de piloter en fonction de l'information de position du levier les quantités de courant à envoyer à l'actionneur électrique. L'utilisateur gère ainsi la tension du câble et sa vitesse de mise en tension et régule celle-ci en fonction de la décélération du véhicule.

Un tel dispositif de commande à main d'un frein de stationnement électrique s'avère satisfaisant pour régler les efforts de freinage lors par exemple d'un démarrage en côte ou encore en décélération dynamique. Toutefois, la commande par un levier articulé autour d'un axe s'avère relativement encombrant dans l'habitacle d'un véhicule automobile.

Le document EP 0 207 275 divulge le préambule de la revendication 1.

Le but de la présente invention est de remédier à l'inconvénient susmentionné.

A cet effet, la présente invention concerne un dispositif de commande à main d'un actionneur électrique d'activation d'un frein secondaire d'un véhicule automobile, comportant un organe de commande actionnable par l'utilisateur pour piloter l'alimentation électrique de l'actionneur en fonction d'une information de position dudit organe délivré par un capteur qui lui est associé, caractérisé en ce que l'organe de commande est constitué d'un premier et d'un second élément aptes à coulisser longitudinalement, entre une position de repos et une position extrême, dans un logement réalisé dans la planche de bord du véhicule automobile, les éléments sont conformés l'un par rapport à l'autre de telle manière que le coulissement du second élément suivant un sens entraîne le déplacement du premier élément et en ce que le premier élément est associé au capteur.

Suivant quelques dispositions intéressantes de l'invention:
- le premier élément est pourvu d'une cloison transversale qui est destinée à coopérer en fin de course avec une butée solidaire du second élément;
- le second élément est pourvu à l'extrémité opposée à la butée d'une ouverture destinée à permettre l'introduction des doigts d'une main d'un utilisateur lorsque le premier élément à sa cloison en contact avec la butée;
- le capteur de déplacement est constitué d'un capteur du type potentiomètre de manière à transmettre à l'actionneur électrique une quantité de courant qui est proportionnel au déplacement du premier élément;
- un moyen élastique de rappel en position de repos du second élément est disposé entre deux butées dont l'une est solidaire de la planche de bord et dont l'autre est solidaire d'une des extrémités du second élément;
- chacun des éléments présente sensiblement la forme générale en coupe longitudinale d'un rectangle et sont disposés adjacents l'un à l'autre.

Les caractéristiques de l'invention mentionnées ci-dessus, ainsi que d'autres, apparaîtront plus clairement à la lecture de la description suivante d'un exemple de réalisation, en se référant aux dessins annexés sur lesquels
- la figure:1 est une schématique d'une planche de bord d'un véhicule automobile équipé d'un dispositif de commande à main d'un frein secondaire électrique selon la présente invention,
- la figure 2 est un schéma synoptique illustrant la structure et le fonctionnement d'un tel dispositif, et
- les figures 3a à 3c sont des vues à plus grande échelle en coupe longitudinale illustrant le fonctionnement du dispositif de commande à main du frein secondaire selon l'invention.

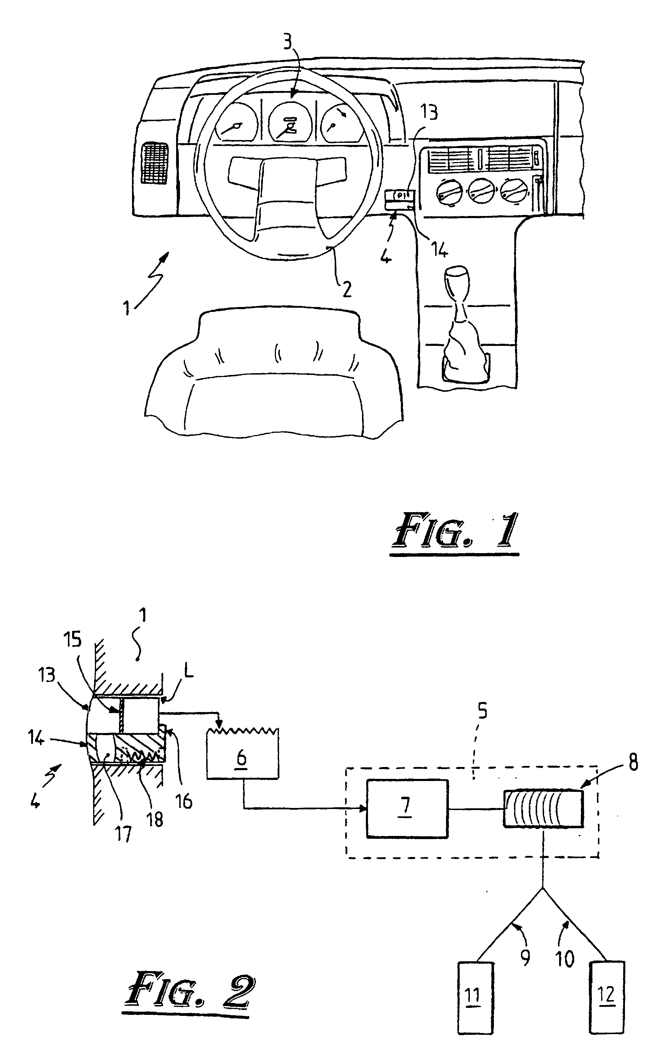

On a représenté à la figure 1, une planche de bord 1 d'un véhicule automobile qui est pourvue de manière classique d'un volant de direction 2, de différents éléments d'indication 3 du type vitesse, jauge à essence etc.

Selon la présente invention, la planche de bord 1 est pourvue d'un organe de commande à main 4 d'un frein secondaire électrique désigné également dans l'état de la technique antérieure sous le nom de frein de parcage, qui est disposé dans le mode de réalisation représenté, dans un logement L réalisé dans la planche de bord 1 à droite du volant de direction 2, et destiné à piloter l'alimentation électrique d'un actionneur électrique 5 qui lui est associé.

On comprend que cet organe de commande à main 4 peut évidement se situer à tous autres endroit au voisinage du poste de conduite, que celui représenté dans le mode de réalisation de la figure 1.

On a représenté à la figure 2, un exemple de réalisation du dispositif de commande à main d'un frein secondaire.

Sur cette figure, on distingue l'organe de commande à main 4 qui est relié à un capteur de déplacement 6 lui-même relié à l'actionneur électrique 5.

L'actionneur électrique 5 comporte par exemple un moteur électrique 7 associé à des moyens d'enroulement/déroulement 8 de câbles 9, 10 associés respectivement à un étrier 11, 12 de freinage d'une roue arrière du véhicule ou avant.

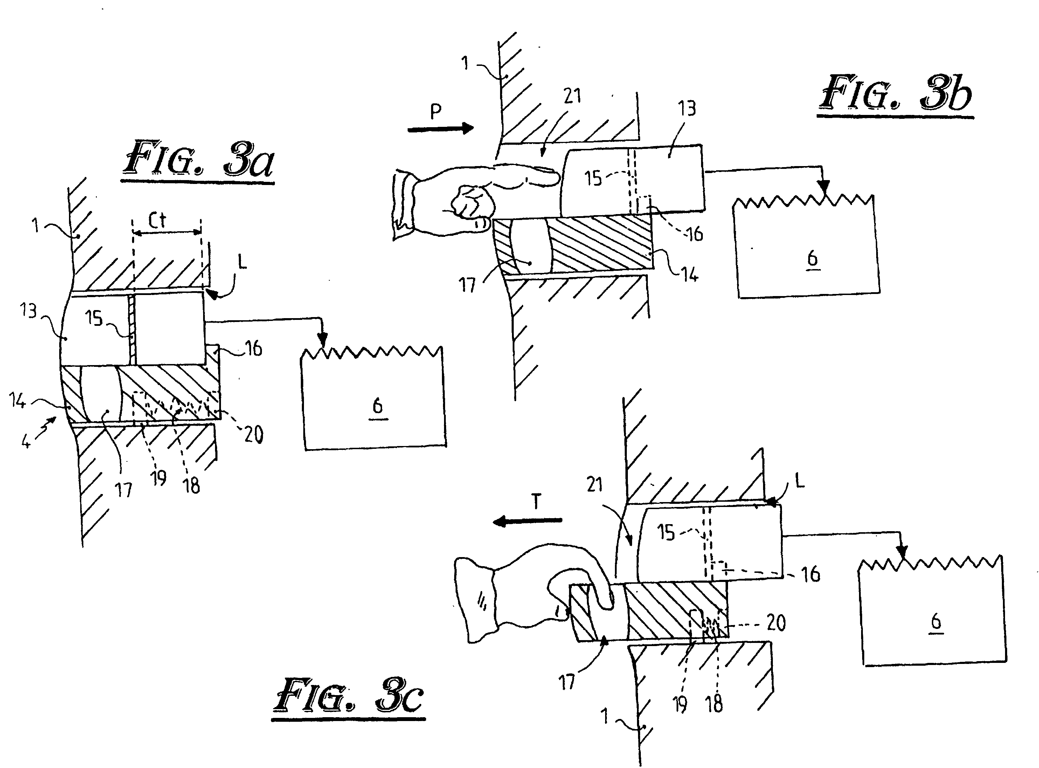

L'organe de commande à main 4 du frein secondaire est constitué selon la présente invention de deux éléments 13, 14, désignés dans la suite de la description premier 13 et second élément 14, adjacents l'un à l'autre. Chacun de ces éléments 13 et 14 présente sensiblement la forme générale en coupe longitudinale d'un rectangle constitué de parois latérales, d'une paroi avant et d'une paroi arrière, comme visible sur les figures 2 et 3 et est apte à coulisser longitudinalement dans le logement L de la planche de bord 1 par l'intermédiaire par exemple de glissières, non représentés, solidaire d'une part des parois latérales des éléments et d'autre part de la planche de bord 1.

On notera que les éléments 13 et 14 sont conformés l'un par rapport à l'autre de telle manière que le coulissement suivant un sens du second élément 14 entraîne le déplacement du premier élément 13 jusqu'à sa position de repos.

Le premier élément 13 est relié au capteur de déplacement 6 pilotant l'actionneur électrique 5, et est pourvue d'une cloison verticale transversale 15 qui est destiné à coopérer en fin de course avec une butée 16 solidaire de la paroi arrière du second élément 14.

Le capteur de déplacement 6 est constitué avantageusement d'un capteur du type potentiomètre de manière à transmettre à l'actionneur électrique 5 une quantité de courant qui est proportionnel au déplacement du premier élément en sens et en amplitude le long de la course de déplacement du premier élément 13 entre ses positions extrêmes, correspondant respectivement aux situations représentées aux figures 3a et 3b.

Cette quantité de courant transmise au moteur électrique 7 permet ainsi suivant le sens de déplacement du premier élément 13 d'enrouler ou de dérouler les câbles 9, 10 et par conséquent de serrer ou de desserrer les étriers de freinage 11 et 12 des roues arrière.

Le second élément 14 est pourvu sensiblement à son extrémité opposée à la butée 16 d'une ouverture verticale 17 destinée à permettre l'introduction des doigts d'une main d'un utilisateur lorsque le premier élément 13 est en position extrême ou partiel de serrage de freinage, c'est-à-dire la cloison 15 du premier élément 13 en contact avec la butée 16 du second élément 14.

Un moyen élastique 18 de rappel en position repos du second élément 14 est disposé entre deux butées 19, 20 dont l'une est solidaire de la planche de bord et dont l'autre est solidaire d'une des extrémités du second élément 14.

Ce moyen élastique 18 est constitué d'un ressort à boudin dont les extrémités prennent appui respectivement sur les butées 18, 19.

Le fonctionnement du dispositif de commande à main selon la présente invention va maintenant être décrit en relation avec notamment les figures 3a à 3c.

En situation de roulage du véhicule, c'est-à-dire frein de stationnement desserré, les deux éléments 13 et 14 sont accolés l'un à l'autre et ont leur face avant respective qui affleure la peau extérieure de la planche de bord 1, comme visible plus clairement à la figure 3a.

On notera que des butées, non représentées, immobilisent les deux éléments 13 et 14 respectivement suivant un sens opposé de manière à assurer leur maintient dans le logement prévu dans la planche de bord.

Lorsque l'utilisateur désire faire une décélération dynamique ou actionner son frein de stationnement ce dernier exerce sur le premier élément 13 une simple poussée, flèche P, déplaçant ainsi ce dernier longitudinalement, entraînant ainsi un déplacement d'une partie mobile du capteur 6 qui transmet alors une quantité de courant au moteur électrique 7 qui enroule par l'intermédiaire des moyens 8 les câbles 9 et 10 mettant ainsi ces derniers en tension de manière à serrer les étriers de freinage 11 et 12.

De façon avantageuse, on notera que l'enroulement des câbles 9 et 10 est proportionnelle au déplacement du premier élément 13.

La cloison 15 du premier élément 13, en position extrême figure 3b, est alors en contact avec la butée 16 du second élément 14. On comprend que la course totale Ct de serrage des organes de freinage est définie entre la cloison 15 du premier élément 13 en position de repos ou de desserrage (figure 3a) et la butée 16 du second élément 14.

Le déplacement du premier élément à sa position extrême libère un espace 21, visible à la figure 3c, dans le logement L de la planche de bord 1.

Cet espace 21 permet avantageusement, pour l'utilisateur lorsque celui-ci désire desserrer les étriers de freinage 11 et 12, d'engager les doigts dans l'ouverture 17 du second élément 14, comme visible plus clairement à la figure 3c, afin d'exercer sur ce dernier une traction, flèche T, entraînant ainsi par coopération de la butée avec la cloison le déplacement du premier élément 13, ainsi que le déplacement de la partie mobile du capteur 6. Ce dernier transmet alors une quantité de courant au moteur électrique 7 en sens inverse ce qui permet de dérouler les câbles et donc de desserrer les étriers de freinage 11 et 12 des roues arrière.

On notera que si l'utilisateur lâche le second élément 14 celui-ci se retrouve automatiquement à sa position de repos (figure 3a) par l'intermédiaire du moyen élastique de rappel 18 qui se comprime entre les deux butées 19 et 20 lors du déplacement du second élément 14, figure 3c.

Bien entendu, sans sortir du cadre de l'invention d'autres moyens équivalents peuvent être envisagé, notamment il est possible de prévoir un mécanisme automatique de rappel du second élément 14 en position de repos, figure 3a, uniquement lorsque le premier élément a atteint sa position de repos.

Dans une variante de réalisation, l'ouverture du second élément 14 peut être remplacée par une poignée faisant saillie vers l'habitacle de la face de cet élément.

On comprend à la lecture de la description ci-dessus, que le dispositif de commande à main selon ta présente invention, est avantageusement simple à utiliser, bien intégré à la planche de bord de manière à former un ensemble esthétique et permet également de pouvoir doser l'effort de desserrage des organes de freinage.

Bien que l'invention ait été décrite en liaison avec un mode de réalisation particulier, elle comprend tous les équivalents techniques des moyens décrits.

## Revendications

1. Dispositif de commande à main d'un actionneur électrique (5) d'activation d'un frein secondaire d'un véhicule automobile, comportant un organe de commande (4) actionnable par l'utilisateur pour piloter l'alimentation électrique de l'actionneur (5) en fonction d'une information de position dudit organe (4) délivrée par un capteur (6) qui lui est associé, **caractérisé en ce que** l'organe de commande (4) est constitué d'un premier (13) et d'un second élément (14) aptes à coulisser longitudinalement, entre une position de repos et une position extrême, dans un logement (L) réalisé dans la planche de bord (1) du véhicule automobile, les éléments (13, 14) sont conformés l'un par rapport à l'autre de telle manière . que le coulissement du second élément (14) suivant un sens entraîne le déplacement du premier élément (13) et **en ce que** le premier élément (13) est associé au capteur (6).

2. Dispositif selon la revendication 1, **caractérisé en ce que** le premier élément (13) est pourvu d'une cloison transversale (15) qui est destinée à coopérer en fin de course avec une butée (16) solidaire du second élément (14).

3. Dispositif selon la revendication 2, **caractérisé en ce que** le second élément (14) est pourvu à l'extrémité opposée à la butée (16) d'une ouverture (17) destinée à permettre l'introduction des doigts d'une main d'un utilisateur lorsque le premier élément (13) à sa cloison (15) en contact avec la butée (16).

4. Dispositif selon l'une quelconque des revendications précédentes, **caractérisé en ce que** le capteur de déplacement est constitué d'un capteur du type potentiomètre de manière à transmettre à l'actionneur électrique (5) une quantité de courant qui est proportionnel au déplacement du premier élément (13).

5. Dispositif selon l'une quelconque des revendications précédentes, **caractérisé en ce qu'**un moyen élastique de rappel (18) en position de repos du second élément (14) est disposé entre deux butées (19, 20) dont l'une est solidaire de la planche de bord (1) et dont l'autre est solidaire d'une des extrémités du second élément (14).

6. Dispositif selon l'une quelconque des revendications précédentes, **caractérisé en ce que** chacun des éléments (13, 14) présente sensiblement la forme générale en coupe longitudinale d'un rectangle et **en ce qu'**ils sont disposés adjacents l'un à l'autre.

## Claims

1. Manual control device of an electric actuator (5) for activating a secondary brake of a motor vehicle, comprising a control member (4) actuatable by the user in order to control the power supply to the actuator (5) as a function of information on the position of said member (4) delivered by a sensor (6) associated therewith, **characterised in that** the control member (4) is constituted by a first (13) and a second element (14) capable of sliding longitudinally, between a rest position and an extreme position, within a housing (L) made in the instrument panel (1) of the motor vehicle, the elements (13, 14) are shaped in relation to each other in such a way that the sliding of the second element (14) in one direction leads to the displacement of the first element (13) and **in that** the first element (13) is associated with the sensor (6).

2. Device according to Claim 1, **characterised in that** the first element (13) is provided with a transverse partition (15) that is intended to co-operate at the end of travel with a stop (16) integral with the second element (14).

3. Device according to Claim 2, **characterised in that** the second element (14) is provided, at the end opposite the stop (16), with an opening (17) intended to allow a user to insert the fingers of one hand when the first element (13) has its partition (15) in contact with the stop (16).

4. Device according to any one of the preceding claims, **characterised in that** the displacement sensor is constituted by a sensor of the potentiometer type so as to transmit to the electric actuator (5) a quantity of current that is proportional to the displacement of the first element (13).

5. Device according to any one of the preceding claims, **characterised in that** a resilient means (18) for returning the second element (14) to the rest position is arranged between two stops (19, 20), one of which is integral with the instrument panel (1) and the other of which is integral with one of the ends of the second element (14).

6. Device according to any one of the preceding claims, **characterised in that** each of the elements (13, 14) has substantially the general shape in longitudinal section of a rectangle and **in that** they are arranged adjacent to one another.

## Patentansprüche

1. Vorrichtung zur handbetätigten Steuerung eines elektrischen Auslösers (5) zur Betätigung einer Zusatzbremse eines Kraftfahrzeugs, die ein Steuerorgan (4) umfasst, das vom Benutzer betätigt werden kann, um die elektrische Versorgung des Auslösers (5) abhängig von einer Information über die Position des Organs (4) zu steuern, die ein ihm zugeordneter Wegmesser (6) liefert, **dadurch gekennzeichnet, dass** das Steuerorgan (4) aus einem ersten Element (13) und einem zweiten Element (14) besteht, die in Längsrichtung zwischen einer Ruhestellung und einer Endposition in einer Aufnahme (L) im Instrumentenbrett (1) des Kraftfahrzeugs verschiebbar sind, wobei die Elemente (13, 14) in ihrer Form so aufeinander abgestimmt sind, dass das Verschieben des zweiten Elements (14) in einer Richtung eine Verschiebung des ersten Elements (13) nach sich zieht, und dadurch, dass das erste Element (13) dem Wegmesser (6) zugeordnet ist.

2. Vorrichtung nach Anspruch 1, **dadurch gekennzeichnet, dass** das erste Element (13) mit einer Querwand (15) versehen ist, die am Ende des Laufs mit einem mit dem zweiten Element (14) fest verbundenen Anschlag (16) zusammenwirkt.

3. Vorrichtung nach Anspruch 2, **dadurch gekennzeichnet, dass** das zweite Element (14) an dem Ende, das dem Anschlag (16) gegenüberliegt, mit einer Öffnung (17) versehen ist, durch die ein Benutzer die Finger einer Hand einführen kann, wenn das erste Element (13) an seiner Wand (15) mit dem Anschlag (16) in Kontakt steht.

4. Vorrichtung nach einem der vorhergehenden Ansprüche, **dadurch gekennzeichnet, dass** der Wegmesser von der Art eines Potentiometers ist, sodass an den elektrischen Auslöser (5) eine Strommenge geliefert wird, die zur Verschiebung des ersten Elements (13) proportional ist.

5. Vorrichtung nach einem der vorhergehenden Ansprüche, **dadurch gekennzeichnet, dass** ein elastisches Mittel (18) zum Rückstellen des zweiten Elements (14) in die Ruhestellung zwischen zwei Anschlägen (19, 20) angeordnet ist, von denen einer mit dem Instrumentenbrett (1) und der andere mit einem der Enden des zweiten Elements (14) fest verbunden ist.

6. Vorrichtung nach einem der vorhergehenden Ansprüche, **dadurch gekennzeichnet, dass** jedes der Elemente (13, 14) im Längsschnitt im Wesentlichen die allgemeine Form eines Rechtecks besitzt und die Elemente aneinander angrenzen.
